## Europäisches Patentamt

## European Patent Office

## Office européen des brevets

(19)

(11) Veröffentlichungsnummer: **0 021 196
B1**

(12)

# EUROPÄISCHE PATENTSCHRIFT

(45) Veröffentlichungstag der Patentschrift:
14.03.84

(51) Int. Cl.³: **G 01 N 29/04**

(21) Anmeldenummer: **80103164.2**

(22) Anmeldetag: **06.06.80**

(54) **Verfahren und Anordnung zur zerstörungsfreien Werkstoffprüfung mit Ultraschallimpulsen und Anordnung zur Durchführung des Verfahrens.**

(30) Priorität: **28.06.79 DE 2926173**

(43) Veröffentlichungstag der Anmeldung:
**07.01.81 Patentblatt 81/1**

(45) Bekanntmachung des Hinweises auf die Patenterteilung:
**14.03.84 Patentblatt 84/11**

(84) Benannte Vertragsstaaten:
**AT BE CH DE FR GB IT LI NL SE**

(56) Entgegenhaltungen:
**DE - A - 1 648 739
DE - A - 1 698 518
DE - A - 2 006 110
DE - A - 2 424 075
DE - A - 2 600 720
DE - A - 2 632 674
US - A - 4 033 179**

(73) Patentinhaber: **SIEMENS AKTIENGESELLSCHAFT,
Berlin und München Wittelsbacherplatz 2,
D-8000 München 2 (DE)**

(72) Erfinder: **Diepers, Heinrich, Dr., Veit-Stoss-Strasse 44,
D-8552 Höchstadt (DE)**
Erfinder: **Niewisch, Joachim, Dr., Stralsunderstrasse 14,
D-8500 Nürnberg (DE)**

Verfahren und Anordnung zur zerstörungsfreien Werkstoffprüfung mit Ultraschallimpulsen und Anordnung zur Durchführung des Verfahrens

Die Erfindung bezieht sich auf ein Verfahren zur zerstörungsfreien Werkstoffprüfung, bei dem wenigstens ein Ultraschallsendeimpuls in ein zu prüfendes Werkstück eingeschallt und der von einer eventuellen Fehlerstelle reflektierte Ultraschallechoimpuls an verschiedenen Punkten der Oberfläche aufgenommen wird. Die Lage der Fehlerstelle wird mit Hilfe einer elektronischen Zeitverzögerung aus der Laufzeit des Ultraschallsendeimpulses bzw. der Ultraschallsendeimpulse und der in elektronische Echosignale umgewandelten Echoimpulse abgeleitet. Weiterhin bezieht sich die Erfindung auf eine Anordnung zur zerstörungsfreien Werkstoffprüfung gemäß dem Oberbegriff des Anspruchs 5 oder Anspruchs 6.

In der zerstörungsfreien Werkstoffprüfung sind bereits Verfahren bekannt, die auf der Streuung oder Reflexion von Ultraschallwellen in Werkstoffen beruhen und die eine Erfassung und Lokalisierung von Änderungen des Gefüges, insbesondere von Fehlerstellen, ermöglichen. In die Oberfläche des zu untersuchenden Werkstückes wird Ultraschall gerichtet eingekoppelt und auf der Oberfläche unter gleichbleibenden Einschallungsbedingungen entlang dem Werkstück verlagert. Die Echostreustrahlung aus dem Werkstück wird erfaßt, und die Amplitude der aufeinanderfolgenden Echoimpulse wird an einem Bildschirm sichtbar gemacht. Während der örtlichen Verlagerung werden die Amplitudenänderungen der aus den verschiedenen aufeinanderfolgenden Ultraschallimpulsen resultierenden Echoimpulse registriert oder gespeichert. Auf dem Bildschirm kann die Amplitude der Echoimpulse als Funktion der Längsverlagerung des Strahlenbündels sichtbar gemacht werden. In der Anordnung zur Durchführung des Verfahrens können die Sender für die Ultraschallimpulse zugleich als Empfänger für die Echoimpulse verwendet werden (DE-Al-2 600 720).

Bei einem bekannten Verfahren zum fortlaufenden Prüfen von festen Körpern mittels Ultraschall wird das Werkstück in ein flüssiges Koppelmedium eingetaucht und das Ergebnis der Prüfung mit Hilfe einer Kathodenstrahlröhre mit Helligkeitsmodulation für den Kathodenstrahl zur Anzeige gebracht. Dabei wird zur Berücksichtigung des Einflusses von unterschiedlich langen Ausbreitungswegen für die Ultraschallimpulse im Koppelmedium einerseits und im Werkstück andererseits das Zeitintervall zwischen der Aussendung eines Ultraschallimpulses und seinem Eintreffen an einem Einfallspunkt des zu prüfenden Körpers anhand eines diesem Einfallspunkt zugeordneten Echosignals bestimmt (DE-Al-1 698 518). Die Prüfung von verhältnismäßig großen Werkstücken erfordert bei diesem Verfahren jedoch einen entsprechend großen Aufwand. Hinzu kommt, daß alle flüssigen Kopplungsmittel im allgemeinen einen wesentlich geringeren Schallwiderstand haben als der zu prüfende Werkstoff.

Besonders schwierig wird die Ankopplung, wenn zahlreiche Wandlerelemente zu einem sogenannten Array vereinigt werden. Deshalb ist man in der Werkstoffprüfung beschränkt auf kleine Arrays mit beispielsweise 20 Schwingern. Beim Sektorscanner kann man durch phasenverschobene Ansteuerung eine Fokussierung und Schwenkung erreichen, so daß ein gewisser Winkelbereich abgetastet werden kann. Aber auch mit dem Sektorscanner kann nur ein Schnittbild, d. h. ein zweidimensionales Bild, erzeugt werden. Große Arrays sind wegen der Ankoppelprobleme an vorgegebenen, gekrümmten Oberflächen nicht möglich.

Bei einer weiteren bekannten Vorrichtung zur zerstörungsfreien Werkstoffprüfung mit Ultraschall wird der an einer Fehlerstelle reflektierte Echoimpuls an verschiedenen Oberflächenpunkten des Werkstücks aufgenommen und die Lage der Fehlerstelle mit Hilfe einer elektronischen Zeitverzögerung ermittelt. Es werden drei Ultraschallwandler verwendet, von denen jeweils zwei als Sender oder als Empfänger dienen. Für einen der beiden Sender- oder Empfängerimpulse ist die Zeitverzögerung vorgesehen. Die Ultraschallwandler werden über die Oberfläche des Werkstücks geführt; sie müssen somit mechanisch bewegt werden. Die Ortsbestimmung der Fehlerstelle erfolgt durch die einstellbare Verzögerung, nachdem die Fehlerstelle erkannt worden ist (DE-AI-2 006 110).

Der Erfindung liegt nun die Aufgabe zugrunde, ein Verfahren zur zerstörungsfreien Werkstoffprüfung mit Ultraschall anzugeben, das es erlaubt, in einem verhältnismäßig großen Volumen, ca. $0,5 \times 0,5 \times 0,5 \ m^3$, nahezu unabhängig von der Oberflächenstruktur und Form mit ruhenden Ultraschallwandlern einen Fehler aufzufinden und außerdem dreidimensional abzubilden. Das Auffinden und Abbilden des Fehlers soll in kurzer Zeit, vorzugsweise wesentlich weniger als einer Minute, möglich sein.

Diese Aufgabe wird durch das Verfahren und die Anordnungen gemäß den Ansprüchen 1, 5 und 6 gelöst. Die Laufzeit ist abhängig von den Koordinaten der Fehlerstelle und der Schallgeschwindigkeit im Material des Werkstückes.

Die Volumenelemente werden nacheinander beschallt und die reflektierten Signale mit an vorbestimmten Punkten auf der Oberfläche angeordneten Ultraschallwandlern aufgenommen und phasenrichtig addiert. Durch ein elektronisches Zeitfenster, dessen Öffnungszeitpunkt eine Funktion der Koordinaten des Volumenelementes und dessen Breite eine Funktion der Größe des Volumenelementes ist, wird zusammen mit den Verzögerungen der Sende- und Echoimpulse ein Volumenelement nach Lage und Größe definiert. Eine Fehlerstelle in diesem Volumenelement äußert sich als vergrößerte Amplitude des addierten Signals im Zeitfenster. Der Wert dieser Amplitude wird nach erfolgter Analog-Digitalwandlung in einem elektronischen Speicher gespeichert. Das Verfahren ermöglicht eine dreidimensionale Abbildung des Werkstückes ohne Änderung der Position der Ultraschallwandler während der gesamten Abtastung des vorbestimmten Volumens, das in seiner Form und Größe durch die Wahl der Laufzeiten der Ultraschallsende- und Ultraschallechoimpulse bestimmt wird. Eine ermittelte Fehlerstelle wird in ihrer Größe, Lage und Form innerhalb des abgetasteten Volumens abgebildet.

Der Fehlerstelle können Ultraschallimpulse von drei in vorbestimmtem Abstand voneinander an der Oberfläche angeordneten Punkten in einem derartigen zeitlichen Abstand vorggeben werden, daß sie an der Fehlerstelle gleichzeitig reflektiert werden. Der Echoimpuls wird dann an den Punkten der Einschallung mit entsprechend unterschiedlichen zeitlichen Abständen wieder aufgenommen und elektronisch verarbeitet. Die phasenrichtige Überlagerung der Echosignale erfolgt durch elektronische Verzögerungsstufen, deren Verzögerungszeiten die gleichen wie beim Senden sind. Sie erscheinen nach der Addition im Zeitfenster, dessen Öffnungszeit so gewählt wird, daß die Echosignale nur von einem vorbestimmten Volumenelement des Werkstückes reflektiert sein können, falls dieses eine Fehlerstelle enthält. Das Volumenelement ist durch die Verzögerungszeiten und durch den Fensteröffnungszeitpunkt eindeutig bestimmt. Die Fensteröffnungszeitdauer bestimmt die Größe des Volumenelementes.

Diese Signale werden nach A/D-Wandlung einem Speicher zugeführt. Ein Abbild des Speicherinhalts kann dann auf einem Bildschirm vorzugsweise perspektivisch dargestellt werden. Die verwendeten drei Ultraschallwandler werden zu diesem Zweck nur einmal auf definierten Stellen angekoppelt und müssen während der Abtastung nicht bewegt werden. Da drei Punkte immer eine Ebene aufspannen, gehen nur noch die absoluten Abstände der Ultraschallwandler in die Koordinatenberechnung ein.

In einer Anordnung zur Durchführung des Verfahrens werden ein Sender und drei Empfänger in einem vorbestimmten Abstand zueinander auf der Oberfläche des Werkstückes angeordnet. Der Sender wird an einen elektronischen Impulsgeber angeschlossen, der über eine elektronische Verzögerungsstufe das elektronische Zeitfenster öffnet. Den Empfängern ist jeweils eine elektronische Verzögerungsstufe zugeordnet, deren Verzögerungszeiten so gewählt werden, daß entsprechend der Laufzeit des Senderimpulses und der Laufzeit des Echoimpulses zu den verschiedenen Empfängern die elektronisch aufaddierten Echosignale nur von einem vorbestimmten Volumenelement des Werkstückes reflektiert sein können. Dieses Volumenelement enthält eine Fehlerstelle, wenn im Zeitfenster Echosignale registriert werden. Die elektronische Addition erfolgt in einem Summierverstärker, dem das elektronische Zeitfenster nachgeordnet ist.

In einer besonders vorteilhaften Anordnung zur Durchführung des Verfahrens mit drei Ultraschallwandlern (Transducer), die zugleich als Sender für Ultraschallimpulse und als Empfänger für die Echoimpulse dienen und vorzugsweise piezoelektrische Schwinger sein können, enthalten die den Transducern zugeordneten Kanäle neben den elektronischen Verzögerungsstufen noch jeweils einen elektronischen Umschalter. Dieser Umschalter überträgt in einer Stellung den Senderimpuls von einem Pulsgeber über die Verzögerungsglieder zu den Transducern. Er wird dann umgeschaltet und überträgt anschließend die von den Transducern aufgenommenen Echosignale über die gleichen Verzögerungsstufen und den elektronischen Summierverstärker zum Zeitfenster.

Wegen der relativ komplizierten Zusammenhänge zwischen Koordinaten und Verzögerungszeiten werden alle Schaltfunktionen von einem elektronischen Rechner gesteuert. Als Rechner wird vorzugsweise ein Mikroprozessor vorgesehen. Dem Rechner werden die Koordinaten der verschiedenen abzutastenden Volumenelemente nach einem frei wählbaren Schema vorgegeben. Der Rechner berechnet aus diesen Koordinaten die erforderlichen Verzögerungszeiten für die Verzögerungsstufen und übernimmt in der Ausführungsform des Fehlerortungssystems mit drei Ultraschallwandlern als Sender und Empfänger die Umschaltung der Kanäle nach der Übertragung der Senderimpulse und die Öffnung des Zeitfensters zu einem Zeitpunkt, der eine Funktion der Koordinaten des Volumenelementes ist.

Zu jedem Volumenelement gehört eine Speicherzelle. Der Speicher kann in beliebiger Reihenfolge vollgeschrieben werden. Zum Auffinden eines Fehlers kann es zweckmäßig sein, das Volumen zunächst grob und in entsprechend kurzer Zeit dadurch abzutasten, daß die Volumenelemente verhältnismäßig groß gewählt werden. Sobald bei dieser Grobabtastung ein Fehler ermittelt wird, kann die unmittelbare Umgebung der Fehlerstelle durch Verkleinerung der angeschalteten Volumenelemente abgetastet und so die Form, Größe und Lage des Fehlers ermittelt werden. Man erhält durch diese Grob- und Feinabtastung eine Lupenwirkung. Da der Speicher eine dreidimensionale Information enthält, kann jede beliebige Darstellung des Fehlers, vorzugsweise perspektivisch, gewählt werden.

Die Empfindlichkeit des Systems kann noch wesentlich erhöht werden, wenn Sectorscanner, die einen Schwenk in drei Dimensionen erlauben, anstelle der drei Ultraschallwandler verwendet werden.

Zur weiteren Erläuterung der Erfindung wird auf die Zeichnung Bezug genommen, in deren Fig. 1 eine Anordnung zur Durchführung des Verfahrens als Blockschaltbild schematisch veranschaulicht ist. In Fig. 2 ist die Wirkungsweise der Anordnung in einem Diagramm dargestellt. Fig. 3 zeigt eine besondere Ausführungsform einer Anordnung zur Durchführung des Verfahrens ebenfalls als Blockschaltbild, und in Fig. 4 ist die Wirkungsweise dieser Anordnung in einem Diagramm veranschaulicht.

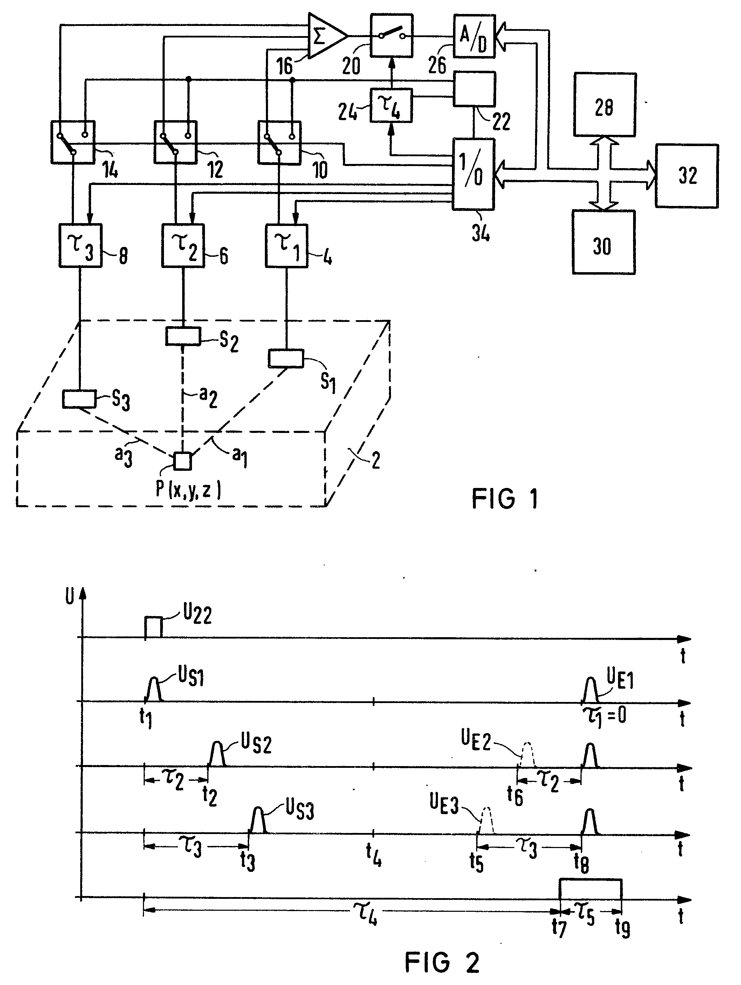

Nach Fig. 1 sind auf der Oberfläche eines Werkstückes 2 drei Ultraschallwandler $S_1$, $S_2$ und $S_3$ angeordnet, die zugleich als Sender für einen Ultraschallimpuls und als Empfänger für einen an einer Fehlerstelle P $(x, y, z)$ im Volumen des Werkstückes 2 reflektierten Echoimpuls dienen sollen, wobei x, y und z kartesische Koordinaten sind. Die Ultraschallwandler $S_1$ bis $S_3$ können beispielsweise Piezokristallschwinger mit Kugelcharakteristik sein. Die Ultraschallwandler $S_1$ bis $S_3$ sind in vorbestimmten, in der Figur nicht näher bezeichneten Abständen zueinander auf der Oberfläche des Werkstückes 2 angeordnet. Die Ultraschallwandler $S_1$ bis $S_3$ haben von einem Volumenelement des Werkstückes 2, das die Fehlerstelle P enthalten soll, jeweils einen vorbestimmten Abstand $a_1$ bzw. $a_2$ bzw. $a_3$. Die Ultraschallwandler $S_1$ bis $S_3$ sind jeweils über einen elektronischen Kanal mit jeweils einer elektronischen Verzögerungsstufe 4 bzw. 6 bzw. 8 und einem Summierverstärker 16 an ein lineares Gate 20 angeschlossen, das als Zeitfenster dient. Die Verzögerungszeiten $\tau$ der Verzögerungsstufen 4, 6 und 8 sind abhängig von den Koordinaten x, y und z des Fehlerpunktes P und der Laufzeit der Ultraschallimpulse $U_S$ im Werkstück 2. Die Kanäle enthalten außerdem jeweils einen elektronischen Umschalter 10 bzw. 12 bzw. 14, welche die Ultraschallwandler $S_1$ bis $S_3$ mit einem elektronischen Pulsgeber 22 verbinden. Dieser Pulsgeber 22 steuert in einer Schaltstellung der Umschalter 10 bis 14 über die Verzögerungsstufen 4 bis 8 die Ultraschallwandler $S_1$ bis $S_3$ und außerdem über eine elektronische Verzögerungsstufe 24 das Gate 20 an. Die Ausgangssignale des Gates 20 werden vorzugsweise über einen Analog-Digitalwandler 26 einem Speicher 28 zugeführt. Die Verzögerungsstufen 4, 6 und 8 sowie 24 sind mit einem elektronischen Rechner 30 verbunden. Der Rechner 30 gibt entsprechend seinem Programm die Koordinaten x, y und z des Fehlerpunktes P vor und steuert nach der Abgabe der Senderimpulse $U_S$ auch die Umschaltung der Umschalter 10, 12 und 14 sowie über die Verzögerungsstufe 24 den Öffnungszeitpunkt des Gates 20, der abhängig ist von den Koordinaten x, y und z des Fehlerpunktes P und von der Laufzeit der Ultraschallimpulse im Werkstück 2.

Im Diagramm nach Fig. 2 sind verschiedene Signale U der Anordnung nach Fig. 1 sowie die Ultraschallimpulse und die Echosignale jeweils in Abhängigkeit von der Zeit t aufgetragen. Zur Zeit $t_1$ soll beispielsweise vom Pulsgeber 22 ein Impuls $U_{22}$ abgegeben werden, der über den Umschalter 10 und die Verzögerungsstufe 4 dem Ultraschallwandler $S_1$ zugeführt wird und dort mit einer Verzögerung $\tau_1 = 0$, d. h. unverzögert einen Ultraschallimpuls $U_{S1}$ auslöst. Der Impuls $U_{22}$ wird über den Umschalter 12 und die Verzögerungsstufe 6 auch dem Ultraschallwandler $S_2$ zugeführt. Die Verzögerungsstufe 6 ist so eingestellt, daß vom Ultraschallwandler $S_2$ erst mit einer Verzögerung $\tau_2$ zur Zeit $t_2$ ein Ultraschallimpuls $U_{S2}$ ausgelöst wird. In gleicher Weise wird der Impuls $U_{22}$ über den Umschalter 14 und die Verzögerungsstufe 8 dem Ultraschallwandler $S_3$ mit einer Verzögerung $\tau_3$ zugeführt und ein Ultraschallimpuls $U_{S3}$ zur Zeit $t_3$ ausgelöst. Die Verzögerung $\tau_2$ des Ultraschallimpulses $U_{S2}$ durch die Verzögerungsstufe 6 wird entsprechend dem geringen Abstand $a_2$ des Ultraschallwandlers $S_2$ und der Laufzeit des Ultraschallimpulses $U_{S2}$ im Werkstück 2 gewählt. Dementsprechend größer wird die Verzögerung $\tau_3$ des Ultraschallwandlers $S_3$ vom Fehlerpunkt P gewählt. Zugleich wird mit dem Impuls $U_{22}$ auch die Verzögerungsstufe 24 eingesetzt, die nach einer Verzögerungszeit $\tau_4$ zur Zeit $t_7$ das Gate 20 öffnet. Nach der Abgabe des Ultraschallimpulses $U_{S3}$ zur Zeit $t_3$ werden die Umschalter 10, 12 und 14 vom Rechner 30 über ein Interface 34 umgeschaltet.

Der Ultraschallimpuls $U_{S1}$ des von der Fehlerstelle P am weitesten entfernten Senders $S_1$ hat die größte Laufzeit. Der Zeitpunkt $t_7$ der Öffnung des Gates 20 wird so gewählt, daß der von der Fehlerstelle P reflektierte, über die Verzögerungsstufe 4 und den Umschalter 10 sowie den Summierverstärker 16 mit der Verzögerung $\tau_1 = 0$ ankommende Echoimpuls $U_{E1}$ zur Zeit $t_8$ im Gate 20 erscheint, wenn das Fenster geöffnet ist. Der Ultraschallimpuls $U_{S2}$ wird entsprechend dem kürzeren Abstand $a_2$ eher reflektiert und würde zur Zeit $t_6$ am Gate 20 eintreffen, wie es in der Figur gestrichelt angedeutet ist. Er wird jedoch von der Verzögerungsstufe 6 mit der gleichen Verzögerung $\tau_2$ wie im Sendefall über den Umschalter 12 und den Summierverstärker 16 dem Gate 20 zugeführt und und erscheint dort dementsprechend zur Zeit $t_8$ im Zeitfenster. In gleicher Weise wird der Echoimpuls $U_{E3}$ nach seinem Eintreffen am Ultraschallwandler $S_3$ zur Zeit $t_5$ durch die Verzögerungsstufe 8 mit der Verzögerung $\tau_3$ über den Umschalter 14 und den Summierverstärker 16 zum Gate 20 gegeben, wo er zur Zeit $t_8$ im Zeitfenster erscheint. Auf dem Bildschirm 32 ist die Lage des Fehlerpunktes P bestimmt durch die Koordinaten x, y, z, die dem Rechner 30 per Programm vorgegeben sind und an denen der Rechner die Verzögerungszeiten $\tau_1$ bis $\tau_3$ sowie $\tau_4$ berechnet und die Umschaltung der Umschalter 10 bis 14 steuert. Die Öffnungszeit $\tau_5$ des Zeitfensters bestimmt die Größe der einzelnen Volumenelemente und damit das Auflösungsvermögen des Reflektorortungssystems.

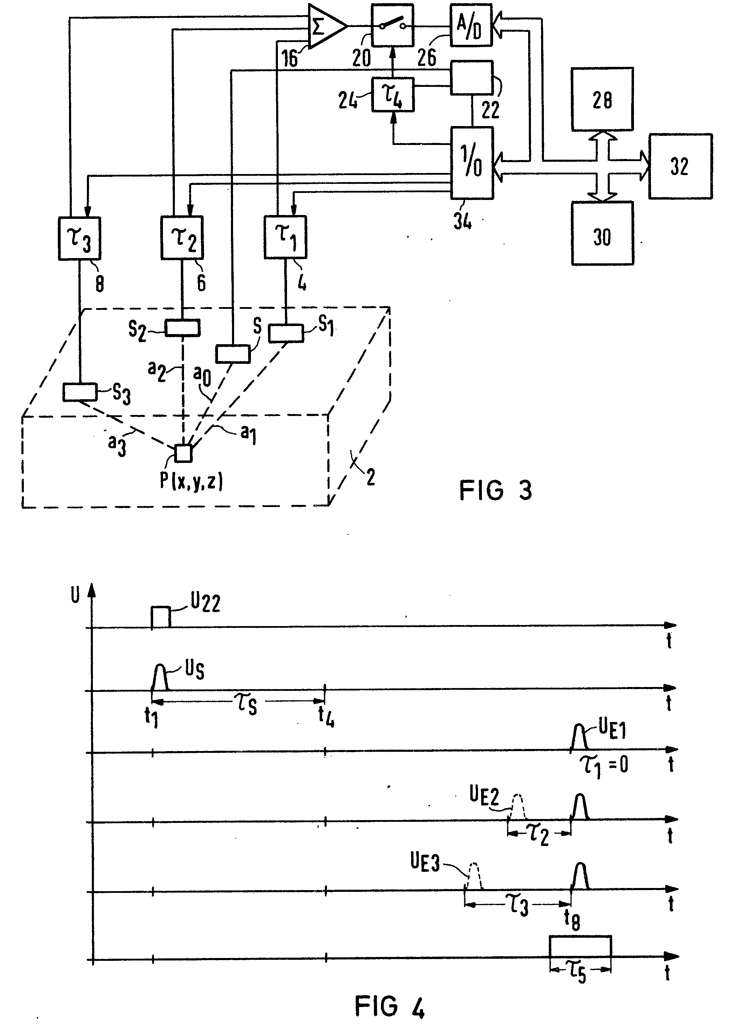

In der Anordnung nach Fig. 3 ist als Sender S ein besonderer Ultraschallwandler mit Kugelcharakteristik vorgesehen, dem ein Sendeimpuls $U_{22}$ vom Pulsgeber 22 direkt zugeführt wird, wie es im Diagramm nach Fig. 4 veranschaulicht ist, in dem verschiedene Impulse U in Abhängigkeit von der Zeit t aufgetragen sind. Der Impuls $U_{22}$ wird unverzögert dem Sender S vorgegeben und

löst zur Zeit $t_1$ einen Sendeimpuls $U_S$ aus. Die Ultraschallwandler $S_1$ bis $S_3$ dienen lediglich als Empfänger für die von der Fehlerstelle P reflektierten Echoimpulse. Der Sender S und die Empfänger $S_1$ bis $S_3$ sind in einem vorbestimmten Abstand zueinander auf der Oberfläche des Werkstückes 2 angeordnet. Der vom Sender S abgegebene Ultraschallimpuls durchläuft im Werkstück 2 während der Zeit $\tau_S$ die Strecke $a_0$ zur Fehlerstelle P und wird dort zur Zeit $\tau_4$ reflektiert. Die Echosignale benötigen zum Durchlaufen der Strecken $a_3$, $a_2$ und $a_1$ entsprechend der Schallgeschwindigkeit im Werkstück 2 vorbestimmte verschiedene Zeiten. Die von den Empfängern $S_1$ bis $S_3$ übertragenen Echosignale $U_{E1}$, $U_{E2}$ und $U_{E3}$ werden von den Verzögerungsstufen 4, 6 und 8 mit verschiedenen Verzögerungszeiten $\tau_1 = 0$ bzw. $\tau_2$ bzw. $\tau_3$ derart verzögert weitergegeben, daß sie den Summierverstärker 16 und somit das Gate 20 zur Zeit $\tau_8$ gleichzeitig erreichen, das während der Zeit $\tau_5$ geöffnet ist. Die Öffnung des Gates 20 erfolgt über die Verzögerungsstufe 24, die vom Pulsgeber 22 gestartet wird. Die Einstellung der Verzögerungszeiten der elektronischen Verzögerungsstufen 4, 6 und 8 und 24 erfolgt vom Rechner 30 über das Interface 34.

Die Anordnung zur Durchführung des Verfahrens nach Fig. 3 hat den Vorteil, daß mit dem besonderen Sender S, der nur zur Einschallung des Sendeimpulses dient, eine verhältnismäßig hohe Energie in das Werkstück 2 eingestrahlt werden kann, d. h. es kann ein Ultraschallwandler verwendet werden, der einen besonders hohen elektromechanischen Wirkungsgrad im Sendefall hat. Die dann nur noch als Empfänger $S_1$ bis $S_3$ dienenden Ultraschallwandler können dann spezielle für hohe Empfindlichkeit ausgelegt sein und vorzugsweise aus Polyvinylidenfluorid $PVF_2$ oder auch aus Polyvinylidenchlorid $PVC_2$ oder Polycarbonat bestehen.

Als Sender S kann beispielsweise auch ein gepulster Laser, insbesondere ein Halbleiterlaser, vorgesehen sein. Als Empfänger können beispielsweise auch Interferometer vorgesehen sein, die nach dem Prinzip des Michelson-Interferometers arbeiten. Weiterhin können Sektorscanner als Ultraschallwandler vorgesehen sein.

In der Ausführungsform des Reflektorortungssystems nach Fig. 3 mit dem zusätzlichen Sender S wird die Abweichung der Lage des Senders S aus der Ebene, welche durch die drei Auflagepunkte der Empfänger $S_1$ bis $S_3$ aufgespannt ist, ausgemessen, und diese Abweichung wird dem Rechner 30 vorgegeben, der sie bei der Berechnung seiner Steuersignale berücksichtigt.

Die Überlagerung der Signale erfolgt im Summierverstärker. Falls durch die Gestalt der Fehlerstelle, beispielsweise ein Riß in Richtung einer der Strecken $a_1$ bis $a_3$ oder mit nur geringer Neigung gegen eine dieser Strecken, eines der Echosignale nur eine verhältnismäßig geringe Amplitude hat, so werden diese unterschiedlichen Signalamplituden durch die Summierung im Verstärker 16 teilweise ausgeglichen, d. h. die Fehleranisotropie wird näherungsweise kompensiert. Die Öffnungszeit des Gates 20 wird so gewählt, daß nur ein Zeitbereich erfaßt wird, der der gewünschten Auflösung entspricht. Eine Reflexion der eingeschallten Signale an der gegenüberliegenden Oberfläche des Werkstückes oder an Fehlerstellen, die außerhalb des angeschallten Volumenelementes liegen, wird nur in dem Maße erfaßt, wie sich zufällig die richtigen Zeitbedingungen ergeben.

Dieser Bilduntergrund kann weiter dadurch reduziert werden, daß man Minimalamplituden in den einzelnen Zweigen fordert. Diese Zusatzforderung kann als 2-fach- oder 3-fach-Koinzidenz geschaltet sein.

## Patentansprüche

1. Verfahren zur zerstörungsfreien Werkstoffprüfung, bei dem wenigstens ein Ultraschallsendeimpuls in ein zu prüfendes Werkstück eingeschallt und der von einer eventuellen Fehlerstelle reflektierte Ultraschallechoimpuls an verschiedenen Punkten der Oberfläche aufgenommen wird und bei dem die Lage der Fehlerstelle mit Hilfe einer elektronischen Zeitverzögerung aus der Laufzeit des Ultraschallsendeimpulses bzw. der Ultraschallsendeimpulse und der in elektronische Echosignale umgewandelten Echoimpulse abgeleitet wird, dadurch gekennzeichnet, daß der im Werkstück (2) an der Fehlerstelle (P) reflektierte Ultraschallechoimpuls an drei vorbestimmten, eine Ebene aufspannenden Oberflächenpunkten aufgenommen wird und daß die elektronischen Echosignale ($U_{E1}$ bis $U_{E3}$) mit einer Verzögerung ($\tau_1$, $\tau_2$, $\tau_3$) phasengleich elektronisch addiert und über ein elektronisches Zeitfenster (20) einem elektronischen Speicher (28) zugeführt werden und daß die jeweilige Verzögerung der elektronischen Echosignale ($U_{E1}$ bis $U_{E3}$) in Abhängigkeit von der jeweiligen Laufzeit ($t_4$ bis $t_8$ bzw. $t_4$ bis $t_6$ bzw. $t_4$ bis $t_5$) der zugehörigen Ultraschallechoimpulse von einem eventuellen Fehler in einem ausgewählten Volumenelement des Werkstücks (2) zu den jeweils vorbestimmten Oberflächenpunkten erfolgt.

2. Verfahren nach Anspruch 1, dadurch gekennzeichnet, daß die Echosignale ($U_{E1}$ bis $U_{E3}$) in digitale Signale umgewandelt und auf einem Bildschirm (28) sichtbar gemacht werden.

3. Verfahren nach Anspruch 1 oder 2, dadurch gekennzeichnet, daß der Fehlerstelle (P) Ultraschallimpulse ($U_{S1}$ bis $U_{S3}$) von drei in vorbestimmtem Abstand voneinander angeordneten Oberflächenpunkten in einem derartigen zeitlichen Abstand ($\tau_1$ bzw. $\tau_2$ bzw. $\tau_3$) vorgegeben werden, daß sie an der Fehlerstelle (P) gleichzeitig reflektiert werden und daß die Verzögerungen ($\tau_1$, $\tau_2$, $\tau_3$) der an den gleichen Oberflächenpunkten aufgenommenen Echosignale ($U_{E1}$ bois $U_{E3}$) gleich den zeitlichen Abständen ($\tau_1$, $\tau_2$, $\tau_3$) der Ultraschallimpulse ($U_{S1}$ bis $U_{S3}$) gewählt werden.

4. Verfahren nach Anspruch 3, dadurch gekennzeichnet, daß durch die Wahl der zeitlichen Abstände ($\tau_1$, $\tau_2$, $\tau_3$) der Ultraschallimpulse ($U_{S1}$ bis $U_{S3}$) und der zeitlichen Verzögerungen ($\tau_1$, $\tau_2$, $\tau_3$) der Echoimpulse ($U_{E1}$ bis $U_{E3}$) zunächst in größerem Abstand voneinander angeordnete Volumenelemente des Werkstückes (2) abgetastet und sobald eine Fehlerstelle (P) ermittelt ist, die Umgebung dieser Fehlerstelle (P) weiter abgetastet wird.

5. Anordnung zur zerstörungsfreien Werkstoffprüfung nach dem Impuls-Echo-Verfahren mit wenigstens drei Ultraschallwandlern, die an verschiedenen Punkten der Oberfläche eines zu prüfenden Werkstücks (2) angeordnet sind und denen wenigstens eine elektronische Verzögerungsstufe zugeordnet ist, dadurch gekennzeichnet, daß wenigstens ein Ultraschallwandler als Sender (S) und drei Ultraschallwandler als Empfänger ($S_1$ bis $S_3$) vorgesehen sind, die an drei vorbestimmten, eine Ebene aufspannenden Oberflächenpunkten des Werkstückes (2) angeordnet sind, und daß der Sender (S) an einen elektronischen Impulsgeber (22) und die Empfänger ($S_1$ bis $S_3$) jeweils über die elektronische Verzögerungsstufe (4, 6, 8) sowie einen Summierverstärker (16) an ein elektronisches Zeitfenster (20) angeschlossen sind, das von dem Impulsgeber (22) über eine weitere elektronische Verzögerungsstufe (24) steuerbar ist.

6. Anordnung zur zerstörungsfreien Werkstoffprüfung nach dem Impuls-Echo-Verfahren mit wenigstens drei Ultraschallwandlern, die an verschiedenen Punkten der Oberfläche eines zu prüfenden Werkstücks (2) angeordnet sind und denen wenigstens eine elektronische Verzögerungsstufe zugeordnet ist, dadurch gekennzeichnet, daß drei Ultraschallwandler ($S_1$ bis $S_3$) vorgesehen sind, die an drei vorbestimmten, eine Ebene aufspannenden Oberflächenpunkten des Werkstücks (2) angeordnet sind, und die zugleich als Sender für Ultraschallimpulse ($U_{S1}$ bis $U_{S3}$) und als Empfänger für die Echosignale ($U_{E1}$ bis $U_{E3}$) dienen, und daß jedem Ultraschallwandler ($S_1$ bis $S_3$) jeweils eine Verzögerungsstufe (4, 6, 8) zugeordnet ist, die jeweils über einen elektronischen Umschalter (10 bzw. 12 bzw. 14) zwischen den Impulsgeber (22) und den zugehörigen Ultraschallwandler ($S_1$ bis $S_3$) oder zwischen den zugehörigen Ultraschallwandler ($S_1$ bis $S_3$) und ein elektronisches Zeitfenster (20) einschaltbar ist.

**Claims**

1. Method of testing materials in a non-destructive manner, according to which at least one ultrasonic transmitting pulse is irradiated into a workpiece to be tested and the ultrasonic echo pulse reflected from any defective area is picked up at various points on the surface, and according to which the position of the defective point is deduced with the aid of an electronic time delay from the transit time of the ultrasonic transmitting pulse or respectively ultrasonic transmitting pulses and the echo pulses converted into electronic echo signals, characterised in that the ultrasonic echo pulse reflected in the workpiece (2) from the defective area (P) is picked up at threee predetermined surface points spanning one plane, and in that the electonic echo signals ($U_{E1}$ to $U_{E3}$) are added electronically and in-phase with a delay ($\tau_1$, $\tau_2$, $\tau_3$) and are fed to an electronic memory (28) via an electronic data window (20), and in that the respective delay in the electronic echo signals ($U_{E1}$ to $U_{E3}$) ist effected in dependence upon the respective transit time ($t_4$ to $t_8$), respectively $t_4$ to $t_6$, respectively $t_4$ to $t_5$) of the associated ultrasonic echo pulses from any defect in a selected volume element of the workpiece (2) to the respectively predetermined surface points.

2. Method according to claim 1, characterised in that the echo signals ($U_{E1}$ to $U_{E3}$) are converted into digital signals and are made visible on a screen (28).

3. Method according to claim 1 or 2, characterised in that ultrasonic pulses ($U_{S1}$ to $U_{S3}$) are given to the defective area (P) from three surface points in a predetermined spaced arrangement with such time intervals ($\tau$, $\tau_2$, respectively $\tau_3$) that they are reflected simultaneously at the defective area (P), and in that the delays ($\tau_1$, $\tau_2$, $\tau_3$) in the echo signals ($U_{E1}$ to $U_{E3}$) picked up at the same surface points are selected to be equal to the time intervals ($\tau_1$, $\tau_2$, $\tau_3$) of the ultrasonic pulses ($U_{S1}$ to $U_{S3}$).

4. Method according to claim 3, characterised in that by selecting the time intervals ($\tau_1$, $\tau_2$, $\tau_3$) of the ultrasonic pulses ($U_{S1}$ to $U_{S3}$) and the time delays ($\tau_1$, $\tau_2$, $\tau_3$) of the echo pulses ($U_{E1}$ to $U_{E3}$), volume elements of the workpiece (2) arranged first of all at a rather large distance from each other are scanned and as soon as a defective area (P) is detected, the area surrounding this defective area (P) is scanned further.

5. Arrangement for the non-destructive testing of materials according to the pulse-echo method, with at least three ultrasonic converters, which are arranged at different points on the surface of a workpiece (2) to be tested and with which at least one electronic delay stage is associated, characterised in that at least one ultrasonic converter ist provided as a transmitter (S) and three ultrasonic converters as receivers ($S_1$ to $S_3$), which are arranged at three predetermined points on the surface of the workpiece (2) spanning one plane, and in that the transmitter (S) is connected to an electronic pulse transmitter (22), and the receivers ($S_1$ to $S_3$) are connected in each case via the electronic delay stage (4, 6, 8) and an adding amplifier (16) to an electronic data window (20), which is controllable via a further electronic delay stage (24) by the pulse transmitter (22).

6. Arrangement for the non-destructive testing of materials according to the method, with at lest ultrasonic converters, which are arranged at different points on the surface of a wirkpiece (2) to be tested and with which at least one electronic delay stage is associated, characterised in that three ultrasonic converters (S₁ to S₃) are provided, which are arranged at three predetermined points on the surface of the workpiece (2) spanning on one plane, and which act simultaneously as transmitters for ultrasonic pulses (U$_{S1}$ to U$_{S3}$) and receivers for the echo signals (U$_{E1}$ to U$_{E3}$), and in that there is associated with each ultrasonic converter (S₁ to S₃) in each case one delay stage (4, 6, 8), which can beswitched on in each case via an electronic converter (10, respectively 12, respectively 14) between the pulse transmitter (22) and the associated ultrasonic converter (S₁ to S₃) or between the associated ultrasonic converter (S₁ to S₃) and an electronic data window (20).

## Revendications

1. Procédé pour l'essai non destructif de matériaux, dans lequel on irradie la pièce à tester avec au moins une impulsion d'émission ultrasonore et on l'enregistre en différents points de la surface l'impulsion d'écho ultrasonore réfléchie par un point défectueux éventuel, et dans lequel la position du point défectueux est dérivée, à l'aide d'un retard temporel électronique, à partir de la durée de transit de l'impulsion d'émission ultrasonore ou des impulsions d'émission ultrasonores et des impulsions d'écho transformées en signaux d'écho électroniques, caractérisé par le fait que l'impulsion d'écho ultrasonore réfléchie dans la pièce à traiter (2) au niveau du point défectueux (P) est enregistrée en trois positions prédéterminées de la surface, qui définissent un plan, et que les signaux d'écho électroniques (U$_{E1}$ à U$_{E3}$) sont, avec un retard ($\tau_1$, $\tau_2$, $\tau_3$), additionnés électroniquement et en phase et sont appliqués par l'intermédiaire d'un créneau temporel électronique (20) à une mémoire électronique (28), et que le retard respectif des signaux d'écho électroniques (U$_{E1}$ à U$_{E3}$) est opéré en fonction de la durée de transit respective (t₄ à t₈ ou t₄ à t₆ ou t₄ ou t₄ à t₅) des impulsions d'écho respectives associées d'un défaut éventuel dans un élément de volume sélectionné de la pièce (2) aux points respectifs prédéterminés de la surface.

2. Procédé selon la revendication 1, caractérisé par le fait que les signaux d'écho (U$_{E1}$ à U$_{E3}$) sont transformés en signaux numériques et sont rendus visibles sur un écran d'image (28).

3. Procédé selon la revendication 1 ou 2, caractérisé par le fait que l'on donne à l'avance au point défectueux (P) des impulsions ultrasonores (U$_{S1}$ à U$_{S3}$) de trois points de la surface disposés entre eux à une distance prédéterminée, et avec un intervalle de temps ($\tau$, $\tau_2$, $\tau_3$) tel qu'elles sont réfléchies simultanément au niveau du point défectueux (P), et que les retards ($\tau_1$, $\tau_2$, $\tau_3$) des signaux d'écho (U$_{E1}$ à U$_{E3}$) enregistrés au niveau de ces mêmes points de la surface sont choisis pour être égaux aux intervalles de temps ($\tau_1$, $\tau_2$, $\tau_3$) des impulsions ultrasonores (U$_{S1}$ à U$_{S3}$).

4. Procédé selon la revendication 3, caractérisé par le fait que par le choix des intervalles de temps ($\tau_1$, $\tau_2$, $\tau_3$) des impulsions ultrasonores (U$_{S1}$ à U$_{S3}$) et des retards temporels ($\tau_1$, $\tau_2$, $\tau_3$) des impulsions d'écho (U$_{E1}$ à U$_{E3}$) sont d'abord explorés au niveau d'éléments de volume de la pièce (2), disposés à une plus grande distance entre eux et qu'un point défectueux (P) est déterminé, l'environnement de ce point défectueux (P) continue à être exploré.

5. Dispositif pour l'essai non destructif de matériaux selon le procédé par impulsions et par écho, avec au moins trois transducteurs ultrasonores qui sont disposés en des points différents de la surface d'une pièce à traiter (2) et auxquels sont associés au moins un étage à retard électronique, caractérisé par le fait qu'au moins un transducteur ultrasonore est prévu en tant qu'émetteur (S) et trois transducteurs ultrasonores en tant que récepteurs (S₁ à S₃) qui sont disposés en trois points déterminés de la surface de la pièce à traiter (2) et déterminant un plan, et que l'émetteur (S) est relié à un générateur électronique d'impulsions (22) et les récepteurs (S₁ à S₃) sont respectivement reliés, par l'intermédiaire de l'étage électronique à retard (4, 6, 8) ainsi que par l'intermédiaire d'un amplificateur de sommation (16), à un créneau électronique temporel (20) qui est susceptible d'être commandé par le générateur d'impulsions (22), par l'intermédiaire d'un autre étage électronique à retard (24).

6. Dispositif pour l'essai non destructif de matériaux selon le procédé par impulsions et écho avec au moins trois transducteurs ultrasonores qui sont disposés en trois points différents de la surface d'une pièce à traiter (2) et auxquels est associé au moins un étage électronique à retard, caractérisé par le fait que sont prévus trois transducteurs ultrasonores (S₁ à S₃) qui sont disposés en trois points prédéterminés de la surface de la pièce à traiter (2) et qui déterminent un plan, et qui servent, en même temps, comme émetteurs pour les impulsions ultrasonores (U$_{S1}$ à U$_{S3}$) et comme récepteurs pour les signaux d'écho (U$_{E1}$ à U$_{E3}$) et qu'à chaque transducteur ultrasonore (S₁ à S₃) sont respectivement associés des étages à retard (4, 6, 8) qui sont susceptibles d'être respectivement branchés, par l'intermédiaire d'un commutateur électronique (10, 12 ou 14), entre le générateur d'impulsions (22) et le transducteur ultrasonore associé (S₁ à S₃) ou entre le transducteur ultrasonore associé (S₁ à S₃) et un créneau temporel électronique (20).

FIG 1

FIG 2

FIG 3

FIG 4